# EUROPEAN PATENT APPLICATION

(11) **EP 1 121 986 A2**
(43) Date of publication of application: **08.08.2001**
(21) Application number: 01300808.1
(22) Date of filing: 30.01.2001
(51) Int. Cl.: B05C 11/10, B05C 1/08, B05B 12/00

(54) **Applying a coating to a can component**

(30) Priority: 05.02.2000 GB 0002613
(71) Applicant: Sencon Europe Limited, Worcester WR3 8SG (GB)
(72) Inventor: Nelen, Lucien Johannes, Worcester WR1 1 SD (GB)
(74) Representative: Jackson, Derek Charles

(57) **Abstract**

A can component (3) is coated with a coating material (2) in a manner which involves determining the number of can components to which the coating material is applied, determining the total amount of coating material applied to the can components, and determining, on the basis of the number of can components and the total amount of coating material applied, the average amount of coating material applied to each can component. In this way it is possible to determine whether the correct amount of coating is being applied to the can components.

## Description

The present invention relates to a method of , and an apparatus for, applying a coating such as a lacquer, base coat, an oil, a wax or varnish to a can component, such as a substantially completed can or a can-making substrate.

A can component may be a completely formed can, for example for containing a beverage, a partially formed can preferably comprises side and bottom portions, or a can making substrate such as the starting sheet material from which a can is made. In the present text the term "can component" includes complete cans, partially formed cans and can making substrates.

At the present time, can components are provided with a coating such as lacquer, a base coat, an oil, a wax or varnish. The coating is generally applied to the surfaces of the can components by a system of rollers over which the desired coating is fed from an open reservoir. The amount of coating applied to the can component is controlled by the spacing of the rollers with excess coating returning to the open reservoir. The coating material can also be applied to the surface of the can components by use of sprays. If too little coating is applied to the can components, corrosion of the can may result or the contents of the resulting can may develop a metallic taste. If too much coating is applied, the coating process becomes unnecessarily expensive.

The most common ways of determining the amount of coating on the can components are either to weigh a can component before application and curing of the coating material and to re-weigh the can component after application and curing of the coating material, or to weigh the can component after application and curing of the coating material then remove the coating and re-weigh the can component.

There are problems associated with the above described methods. The main problem being that the curing process takes approximately fifteen minutes to carry out and therefore, by the time the amount of coating has been determined, many more can components have been coated and are in the process of being cured. Bearing in mind that coating systems generally run in the region of 4000 to 100,000 units per hour, this can lead to a great deal of wastage if it is found that the amount of coating is incorrect.

It is therefore an object of the present invention to create a way of substantially continuously determining the amount of coating on a can component to avoid the problems associated with the above described sampling methods.

According to one aspect of the present invention there is provided a method of coating a can component with a coating material comprising the steps of:
providing an amount of the coating material in a reservoir;
applying the coating material from the reservoir to a surface of a plurality of can components;
determining the number of can components to which the coating material is applied;
determining the total amount of coating material applied to the can components; and
determining, on the basis of the number of can components and the total amount of coating material applied, the average amount of coating material applied to each can component.

According to another aspect of the present invention there is provided an apparatus for coating a can component with a coating material comprising:
a reservoir for containing an amount of the coating material;
means for applying the coating material from the reservoir to a surface of a plurality of can components;
means for determining the number of can components to which the coating material is applied;
means for determining the total amount of the coating material applied to the can components; and
means for determining, on the basis of the number of can components and the total amount of coating material applied, the average amount of coating material applied to each can component.

The present invention allows determination, and therefore monitoring, of the average amount of coating applied to a can component without the need for sampling.

The average may be determined on the basis of a rolling calculation, i.e. with new information replacing the oldest information on a substantially continuous basis.

The total amount of coating material applied to the can components may determined by determining the amount of coating material in the reservoir before the can components are coated and subsequently determining the amount of coating material in the reservoir after the can components are coated. The amount of coating material in the reservoir may be replenished after the can components are coated.

Thus the monitoring procedure may be a repeating batch procedure with, for example, 100 partially formed can components being coated to form a batch and the amount of coating used for the batch being determined. The average amount of coating applied can be calculated at the end of each batch.

The reservoir may be refilled at the end of a period of monitoring during which no further measurements can be taken. Once the reservoir has been refilled, the initial amount of coating material can be determined and the monitoring procedure can begin again.

The coating procedure however is continuous and does not stop while the reservoir is being refilled between batches of monitoring as it is not economical to stop and restart the machinery.

As a further option, the amount of coating material in the reservoir may be topped-up, during application of the coating material, by adding a known amount of coating material thereto.

As a further alternative, the total amount of coating material applied to the can components may be determined by maintaining a substantially constant known amount in the reservoir by topping up the amount of coating material in the reservoir from a top-up tank. In this case, the step of determining the total amount of coating material may be effected by determining the amount of coating material passing from the top-up tank to the reservoir in a period of time taken to coat the number of can components to which the coating is applied.

In the monitoring procedure, the number of can components can be a predetermined number and the amount of the coating material used to coat the predetermined number of can components can be determined. Alternatively, the change in amount of the coating material can be predetermined and the number of can components coated with a predetermined weight of coating material can be determined.

In both cases the average amount of coating applied to each can component can readily calculated by dividing the amount of coating material used by the number of can components coated.

The coating material is preferably applied by use of rollers or a spray.

A can component may be made by rolling and welding a sheet of material to form a cylinder. In such case, the sheet of material is coated before rolling and welding.

Alternatively the can component may be made by punching the cylindrical side walls and base out of a sheet of material. In this case, the inside of the can component and the base are coated by spraying and the outside of the side wall is coated using rollers or by spraying.

When the coating material is applied using rollers, the coating material is usually applied to the rollers in excess. The excess is collected and returned to the coating material reservoir.

Means may be provided to adjust the amount of coating material applied to the can components in response to the results of the monitoring procedure. The adjusting means may be a means to adjust the pressure of the coating material in the reservoir or a means for adjusting the spacing between rollers applying the coating material. As a further alternative, the amount of coating material applied to the can components may be adjusted by varying the viscosity of the coating material. Adjustment may be effected automatically.

The step of determining the total amount of coating material applied to the can components may include the step of determining the viscosity of the coating material and adjusting the viscosity, if necessary, by adding solvent to the reservoir. Any added solvent may be mixed into the coating mixture.

A balance or a load cell may be provided to determine the amount of coating material in the reservoir.

A process control unit is preferably provided to monitor the amount, e.g. weight, of coating material in the reservoir and the change in the amount, e.g. weight, of coating material in the reservoir and the number of can components coated with coating material. The process control unit may also monitor the flow rate of coating material from the top-up tank into the reservoir. The process control unit may also control the adjustment of the amount of coating material applied to the can components, for example by varying the amount of coating material applied to, or passed by, the coating apparatus.

The coating material may be amongst other things a base coat material, an over varnish, an oil, a wax or a lacquer.

For a better understanding of the present invention and to show more clearly how it may be carried into effect reference will now be made, by way of example, to the accompanying drawings in which:
Figure 1 is a diagrammatic illustration of one embodiment of an apparatus according to the present invention;
Figure 2 is a diagrammatic illustration of another embodiment of an apparatus according to the present invention;
Figure 3 is a diagrammatic illustration of a further embodiment of an apparatus according to the present invention; and
Figure 4 is a diagrammatic illustration of a yet another embodiment of an apparatus according to the present invention.

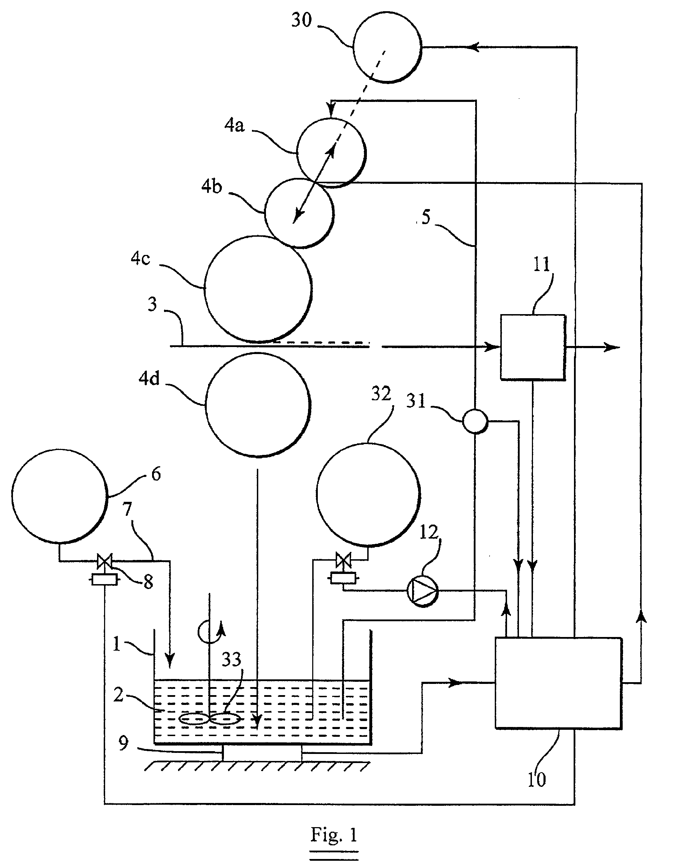

Figure 1 shows a reservoir 1 containing an amount of a coating material 2 to be applied to a can component 3. The coating material is fed from reservoir 1 to a set of rollers 4a, 4b, 4c and 4d by a pump 12 through a pipe line 5. The rollers 4a - 4d are powered by a motor 30. The rollers 4a - 4d are positioned such that excess coating material 2 applied to the rollers falls back into reservoir 1. The reservoir 1 is connected to a top-up tank 6 by means of a pipe line 7 having an on/off valve 8.

The reservoir 1 is positioned on a load cell 9 which is connected to a process control unit 10.

In use, the reservoir 1 is filled with a predetermined weight of coating material 2, the coating material 2 being supplied from the top-up tank 6 via pipeline 7 and being controlled by on/off valve 8.

It should be noted the amount of coating material in the reservoir may be determined by other means. For example, an ultrasonic, or other, level sensor can be used to determine the volume of coating material in the reservoir, and the density of the coating material can be employed to determine the weight of the coating material in the reservoir.

In the embodiment of Figure 1, the initial weight of the coating material 2 and reservoir 1 is determined by the load cell 9 and fed into the process control unit 10.

The material 2 is then piped along pipeline 5 to rollers 4a - 4d and is applied to the can component 3. Any excess material 2 falls back into the reservoir 1.

The can components 3 to which the coating material 2 is applied are counted by a counter 11 which is also connected to the process control unit 10.

The counter 11 is set to count any predetermined number, for example one hundred, of coated can components and, when the required number of can components have been coated, this information is fed to the process control unit 10. The process control unit 10 then takes a further weight measurement of the coating material 2 and reservoir 1 from load cell 9. The average weight of coating material 2 applied to each can component 3 can be calculated by dividing the total weight change of the coating material 2 and reservoir 1 by the number of can components coated, e.g. 100. If desired, the average may be determined on the basis of a rolling calculation.

The reservoir 1 is then topped up with coating material 2 from top-up tank 6. During this process the coating process continues but the monitoring process is suspended until the required level is obtained in the reservoir 1.

The amount of coating material 2 to be applied to the can components 3 may be controlled, for example automatically, in dependence upon the determined amount. As shown diagrammatically in Figure 1, the process control unit 10 can control the spacing between rollers 4a and 4b thereby to control the amount of coating material transferred to the subsequent roller 4c and to the can component 3. Alternatively, as indicated diagrammatically in Figure 1, the viscosity of the coating material may be varied by adding solvent from a solvent tank 32 to the coating material under control of the process control unit 10.

Further, as the coating material 2 is circulated over the rollers 4a - 4d and returned to the reservoir 1, solvent tends to evaporate. It is possible to compensate for the loss of solvent by determining the viscosity of the coating material in the pipeline 5 with the aid of a viscometer 31 and adding solvent to the coating material in the reservoir 1, if necessary, from the tank 32. It is then advantageous to mix the solvent with the coating material with the aid of a mixing blade 33, shown diagrammatically. It may be necessary to momentarily suspend the mixing operation while the monitoring system reads the load cell 9.

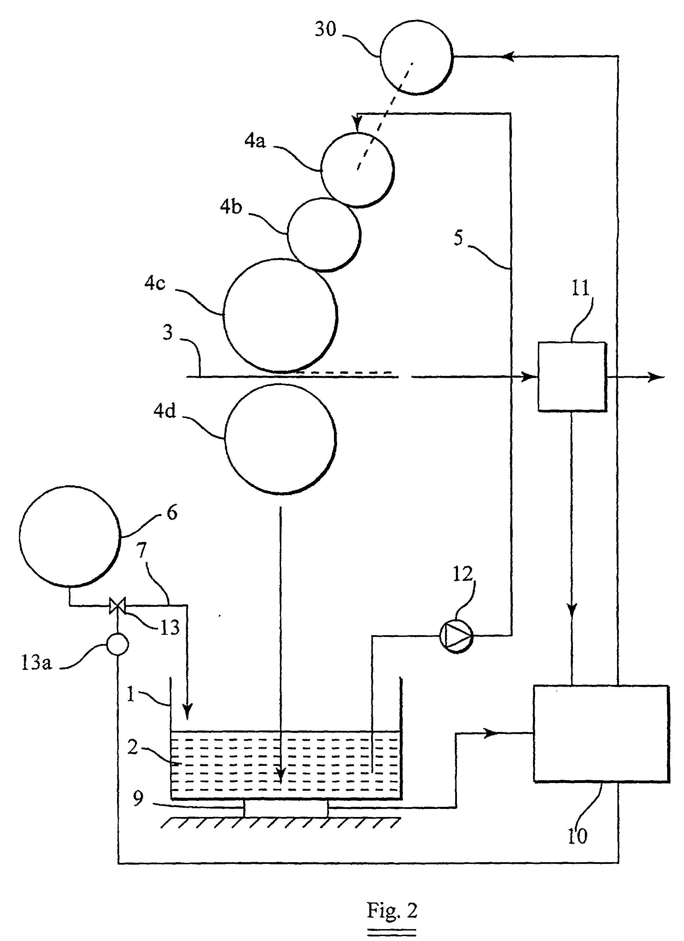

In an alternative embodiment shown in Figure 2, where like numbers indicate like parts, the on-off valve 8 on pipeline 7 is replaced by a flow control valve 13 operated by a flow controller 13a. The flow controller 13a is connected to the process control unit 10.

In use of the embodiment shown in Figure 2, the weight of the coating material in reservoir 1 is kept constant by matching the mass or volume flow rate of coating material from top-up tank 6 into reservoir 1 to the flow rate of the coating material 2 from reservoir 1 to rollers 4a - 4d, taking into account the excess coating material 2 returning to the reservoir 1. As in the embodiment of Figure 1, the counter 11 is set to count 100 can components and, from the flow rate of coating material 2 from top-up tank 6 and the time taken to coat 100 can components, the total amount of coating material 2 used and therefore the average amount on each can component can be calculated.

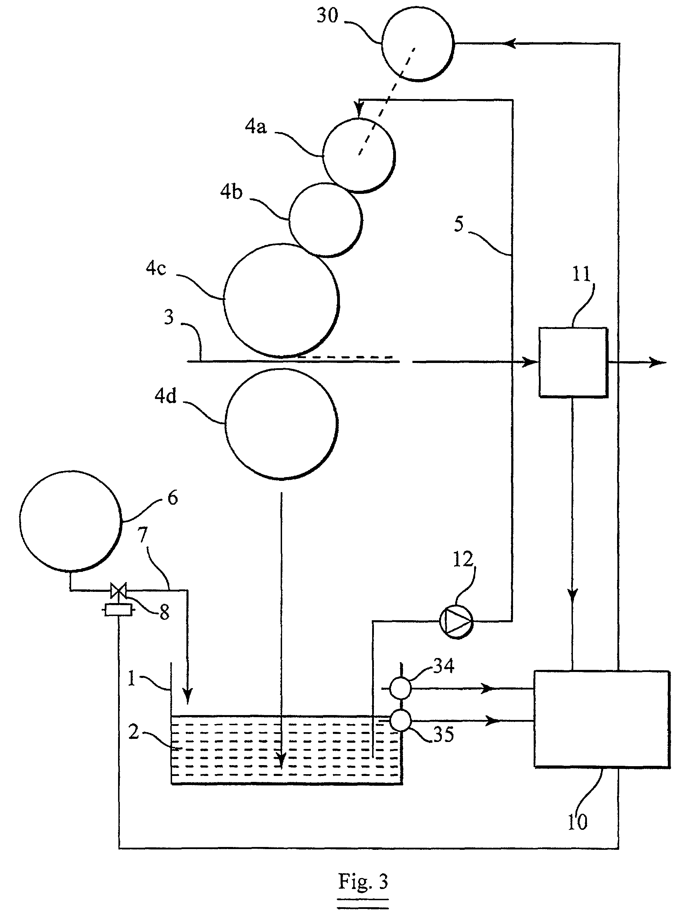

Alternatively, a slower response system shown in Figure 3 does not weigh the reservoir 1 and coating material 2, but level switches 34, 35 are provided to determine maximum and minimum levels, respectively, of for the coating material within the reservoir. The mass or volume of coating material that flows into the reservoir can still be used to calculate the amount of coating material applied to each can component.

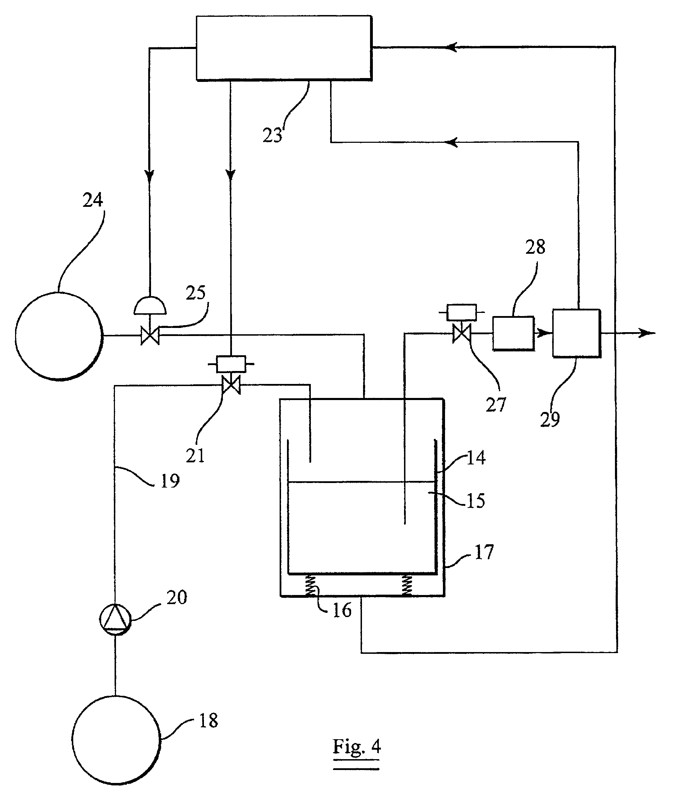

Figure 4 shows a further embodiment of the present invention used when the material applied to the can component is not applied in excess. The system is a closed loop system and therefore allows adjustment of some parameters of the system.

The apparatus comprises a reservoir 14 containing a coating material 15 and supported by a load cell 16. The reservoir 14 is held in a vessel 17, pressurised by the use of pressurised air. The level of material 15 in reservoir 14 can be topped up from the top-up tank 18 which is connected to reservoir 14 by a pipeline 19 having a solenoid control valve 21. The solenoid control valve 21 is controlled by a process control unit 23.

A pressurised gas supply 24, for example pressurised air, is connected to the pressurised vessel 17 by means of a pressure control valve 25 which is controlled by process control unit 23.

The load cell 16 is also connected to the process control unit 23. The coating material 15 is forced out under gas pressure along pipeline 26 and is supplied to the means 27, such as a spray, for applying the coating material to the can component 28 to be coated.

The apparatus is provided with a counter 29 which is connected to the process control unit 23.

In use, the reservoir 14 is supplied with a pre-determined weight of coating material 15 from the top up tank 18 via pipeline 19. The supply of material 15 to the reservoir 14 is controlled by the process control unit 23 which acts on solenoid valve 21 in the pipeline 19.

The initial weight of the reservoir 14 and coating material 15 is taken by the load cell 16 and fed into the process control unit 23.

The vessel 17 surrounding reservoir 14 is permanently pressurised using the pressurised gas supply 24 which is controlled by process control unit 23 through pressure control valve 25. The application of pressure to the vessel 17 causes the material 15 to flow along pipeline 26 to the means 27, such as a spray, for applying it to the can component 28.

The number of can components to which the material 15 is applied is counted by counter 29 which is connected to the process control unit 23.

As in the previously described embodiments, the counter is set to count, for example, 100 can components after which time the load cell 16 takes a further measurement of the weight of the reservoir 14 and coating material 15. The average weight of coating material 15 applied to each can component can then be calculated by dividing the weight change of the coating material 15 and reservoir 14 by the number of can components coated.

The embodiment of Figure 4 is a closed loop and it is therefore possible to adjust the amount of coating material being applied to each can component by increasing or decreasing the pressure in vessel 17 to increase or decrease the flow rate of coating material to the application means. The process control unit 23 controls the adjustment process in response to the monitoring process to keep within predetermined levels of coating material.

The reservoir 14 is topped up from top-up tank 18 after each monitoring process during which time the coating process continues but the monitoring process is suspended until the required level is obtained in reservoir 14. The coating material 15 is fed into reservoir 14 from tank 18 at a higher pressure than the pressure in the vessel 17. The process control unit 23 accommodates the change in pressure to ensure there is no impact on the amount of coating material applied to the can components.

It is of course possible in the embodiments shown in Figures 1 and 4 for the process control unit to monitor the number of can components coated with a predetermined weight of coating material. The calculation performed to calculate the average amount of coating material per can component is still the total amount of coating material divided by the number of can components coated. The only difference being that the predetermined variable is the weight of coating material used.

## Claims

1. A method of coating a can component (3, 28) with a coating material (2, 15) characterised by the steps of:
providing an amount of the coating material in a reservoir (1, 14);
applying the coating material from the reservoir to a surface of a plurality of can components (3, 28);
determining the number of can components to which the coating material (2, 15) is applied;
determining the total amount of coating material (2, 15) applied to the can components (3, 28); and
determining, on the basis of the number of can components (3, 28) and the total amount of coating material (2, 15) applied, the average amount of coating material applied to each can component.

2. A method according to claim 1, characterised in that the total amount of coating material (2, 15) applied to the can components (3, 28) is determined by determining the amount of coating material in the reservoir (1, 14) before the can components are coated and subsequently determining the amount of coating material in the reservoir after the can components are coated.

3. A method according to claim 2, characterised in that the amount of coating material (2, 15) in the reservoir (1, 14) is replenished after the can components (3, 28) are coated.

4. A method according to any preceding claim and including the step, during application of the coating material (2, 15), of topping up the amount of coating material in the reservoir (1, 14) by adding a known amount of coating material thereto.

5. A method according to claim 1, characterised in that the total amount of coating material (2, 15) applied to the can components (3, 28) is determined by maintaining a substantially constant known amount in the reservoir (1, 14) by topping up the amount of coating material in the reservoir from a top-up tank (6, 18).

6. A method according to claim 5, characterised in that the step of determining the total amount of coating material (2, 15) is effected by determining the amount of coating material passing from the top-up tank (6, 18) to the reservoir (1, 14) in a period of time taken to coat the number of can components (3, 28) to which the coating is applied.

7. A method according to any preceding claim and including the step of adjusting, such as automatically, the amount of coating material (2, 15) applied to the can components (3, 28) in response to the determined average amount of coating material applied to each can component, for example by adjusting the pressure of the coating material in the reservoir (1, 14) or by adjusting the spacing between rollers (4a, 4b) applying the coating material.

8. A method according to any preceding claim, characterised in that the step of determining the total amount of coating material (2) applied to the can components (3) includes the step of determining the viscosity of the coating material and adjusting the viscosity, if necessary, by adding solvent to the reservoir (1), which may be mixed into the coating mixture.

9. An apparatus for coating a can component (3, 28) with a coating material (2, 15) characterised by:
a reservoir (1, 14) for containing an amount of the coating material;
means (4a - 4d, 27) for applying the coating material from the reservoir to a surface of a plurality of can components (3, 28);
means for determining the number of can components to which the coating material (2, 15) is applied;
means for determining the total amount of the coating material applied to the can components (3, 28); and
means for determining, on the basis of the number of can components (3, 28) and the total amount of coating material (2, 15) applied, the average amount of coating material applied to each can component.

10. An apparatus as claimed in claim 9 and including means (9, 16) for determining the amount of coating material (2, 15) in the reservoir (1, 14) before the can components are coated and subsequently after the can components are coated.

11. An apparatus as claimed in claim 10 and including means (6, 18) for replenishing the amount of coating material (2, 15) in the reservoir (1, 14) after the can components (3, 28) are coated.

12. An apparatus as claimed in any one of claims 9 to 11 and including means (6, 8, 34, 35, 18) for topping-up the amount of coating material (2, 15) in the reservoir (1, 14) by adding a known amount of coating material thereto.

13. An apparatus as claimed in claim 9 and including means (13a, 20) for maintaining a substantially constant known amount of coating material (2, 15) in the reservoir (1, 14) by topping up the amount of coating material in the reservoir from a top-up tank (6, 18).

14. An apparatus as claimed in claim 13 and including means (13a, 20) for determining the amount of coating material (2, 15) passing from the top-up tank (6, 18) to the reservoir (1, 14) in a period of time taken to coat the number of can components (3, 28) to which the coating is applied.

15. An apparatus as claimed in any one of claims 9 to 14 and including means (10, 23) to adjust the amount of coating material (2, 15) applied to the can components (3, 28) in response to the determined average amount of coating material applied to each can component.

16. An apparatus as claimed in claim 15, wherein the adjusting means comprises means for adjusting the spacing between rollers (4a, 4b) applying the coating material (2).

17. An apparatus as claimed in claim 15, wherein the reservoir (14) is enclosed in a pressurised vessel (17) and the amount of coating material (15) applied to the can components (28) is adjusted by varying the pressure in the vessel.

18. An apparatus as claimed in claim 15 and including means (31, 32) for varying the viscosity of the coating material (2) in order to adjust the amount of coating material applied to the can components (3).
